# EUROPEAN PATENT APPLICATION

(11) **EP 4 803 932 A1**
(43) Date of publication of application: **09.09.2026**
(21) Application number: 25162176.9
(22) Date of filing: 06.03.2025
(51) Int. Cl.: G01S 17/89, G01S 17/933, G01S 17/86

(54) **SYSTEMS AND METHODS OF LOCALISATION OF A VEHICLE FOR NAVIGATION**

(71) Applicant: Flare Bright Ltd, Aylesbury Buckinghamshire HP18 0XB (GB)
(72) Inventor: HAMILTON, Kelvin, Aylesbury, HP18 0XB (GB); RIDER, Conrad, Aylesbury, HP18 0XB (GB); SEQUEIRA, Carl, Aylesbury, HP18 0XB (GB); FURSE, Gabriel, Aylesbury, HP18 0XB (GB); MUNKS, Matthew, Aylesbury, HP18 0XB (GB)
(74) Representative: Mathys & Squire

(57) **Abstract**

A computer-implemented method for navigation of a vehicle is provided. The method determines vehicle position in real time by obtaining two or more candidate locations for a vehicle, and for each of the two or more candidate locations, determining a theoretical distance from the vehicle to the ground, based on terrain data. The method also obtains one or more single point measurements of an actual distance from the vehicle to the ground, for example such as measurements obtained from a single-beam LiDAR sensor. A terrain localisation for the vehicle is then determined based on comparing the one or more single point measurements and the theoretical distance from the vehicle to the ground for each candidate location. An updated location estimate of the vehicle may then be output based on the candidate location whose distance to the ground most closely matches the one or more single point measurements.

## Description

### Field of the invention

The present disclosure relates to systems and methods for localisation of a vehicle for navigation, in particular for an aircraft, using single beam LiDAR or other single point distance measurements.

### Background

Accurate aircraft location estimation is crucial for aircraft navigation, particularly for autonomous aircraft, such as unmanned aerial vehicles (UAVs), also known as uncrewed aerial systems (UASs), where the aircraft is configured to dynamically adjust, reorientate, or adapt its own navigation course, without any control input from an operator or user, based on its location.

Whilst many systems rely on GPS or other GNSS systems for aircraft location estimates; these approaches are unsuitable for use in GNSS denied or jammed environments. When GNSS is not available, the accuracy of navigation can be severely compromised.

For example, systems reliant on GNSS-free inertial navigation can suffer from drift in their location estimate over time and are unsuitable for anything but short duration flights due to the lack of absolute location fixes. This results in accumulating location errors throughout flights, and in worst case scenarios, can cause the aircraft to veer off course or crash.

There is therefore a need to provide improved location determination systems and methods for improved aircraft navigation, without reliance on GPS or other GNSS systems.

Light Detection and Ranging (LiDAR) is a remote sensing technology that uses laser beams to measure distances in real time. The distance is measured by sending a short laser pulse and recording the time lapse between outgoing light pulse and the detection of the reflected (back-scattered) light pulse. LiDAR may be used for autonomous vehicle navigation, however LiDAR-based methods typically require a multi-beam 2D or 3D LiDAR sensor, and large amounts of computing power to process the large multi-beam data set in order to construct a three-dimensional model of the environment around the LiDAR sensor. As such, known multi-beam LiDAR navigation methods are often both time and power intensive, making them unsuitable for many lightweight aircraft, including UASs. In particular, UASs are typically limited in terms of their payload's Size, Weight, and Power (SWaP). This restricts, and often prohibits, the use of large LiDAR sensors and associated computers for UASs.

There is therefore also a need to provide computationally lightweight systems and methods and to enable accurate, robust GNSS-free navigation, without requiring heavy sensors or extensive computing power. This is especially relevant to smaller and/or attritable UASs that might have a short operational life.

### Summary of the invention

Aspects of the invention are as set out in the independent claims and optional features are set out in the dependent claims. Aspects of the invention may be provided in conjunction with each other and features of one aspect may be applied to other aspects.

In a first aspect of the invention, there is provided a computer-implemented method of localisation of a vehicle position in geographic space, for example for navigation of said vehicle. The method comprises obtaining two or more candidate locations for a vehicle; and for each of the two or more candidate locations, determining a theoretical distance from the vehicle's candidate location to the ground, based on terrain data. The method further comprises obtaining one or more single point measurements of an actual distance from the vehicle to the ground, and determining a terrain localisation for the vehicle based on comparing the one or more single point measurements and the theoretical distance from the vehicle to the ground for each candidate location. An updated location estimate of the vehicle may then be output based on the determined terrain localisation.

This may be advantageous to improve location accuracy, and hence navigation accuracy, in vehicles, particularly autonomous and/or unmanned vehicles. This may be particularly advantageous for vehicles operating in environments where GNSS-based navigation systems are unavailable. For example, the two or more candidate locations for the vehicle may be obtained based on a first location estimate from a navigation system of the vehicle without the use of GNSS, such as via an inertial based navigation system. The method may also be advantageous as it can avoid localisation estimate drift over time, unlike relative navigation methods such as dead reckoning or visual odometry. The method may also advantageously be able to operate in, for example, low light conditions, at night, and in visually uniform environments (such as deserts, for example), providing an advantage compared to vision-based systems.

Notwithstanding the above, the skilled person will understand that the navigation system need not be GNSS-independent and may also be used with GNSS. Alternatively or in addition, the present method may be used in conjunction with a simple dead-reckoning system. The two or more candidate locations may be derived merely from a 'best guess' at the vehicle's location, regardless of how this 'best guess' is obtained.

The single point measurements of the distance from the vehicle to the ground are preferably obtained from a sensor onboard the vehicle. The single point measurements may be particularly advantageous for lightweight vehicles as the present method requires few sensors, and importantly, minimal computing power onboard the vehicle. This therefore frees up available payload or, alternatively, can reduce the overall weight of the vehicle.

In preferred embodiments, the vehicle may be an aircraft, such as an unmanned aerial vehicle (UAV) or system (UAS). However, the skilled person will understand that this is not limiting, and that the method may also be applied for other vehicles. For example, in some examples, the vehicle may be a marine vehicle, such as a surface marine vehicle or subsea vehicle. In said marine examples, the distance from the vehicle to the ground may be taken to be the distance from the vehicle to the seafloor. In other examples, the vehicle may be a land vehicle.

The one or more single point measurements of the distance from the vehicle to the ground may be one or more single beam LiDAR measurements obtained by a LiDAR sensor from the vehicle. In some examples, determining the theoretical distance from the vehicle to the ground for the two or more candidate vehicle locations comprises simulating theoretical LiDAR measurements taken from the two or more candidate vehicle locations. Determining the terrain localisation may then be based on selecting the candidate vehicle location(s) which are most similar and/or consistent with the one or more single beam LiDAR measurements.

The terrain data may refer to elevation data across the terrain or ground. The terrain data may be stored as a terrain map.

The method may further comprise obtaining a plurality of single point measurements of distance from the vehicle to the ground, each single point measurement corresponding to a point in time. A plurality of theoretical distances from the vehicle's candidate locations to the ground may also be determined for the same plurality of points in time by way of comparison. In said examples, determining the terrain localisation may comprise determining a two-dimensional terrain localisation based on the plurality of single point measurements. For example, the two-dimensional terrain localisation may be a line profile of the terrain based on the path of the vehicle over time.

The method may further comprise assigning a weighting to each of the two or more candidate locations of the vehicle based on a comparison between the theoretical distance from the vehicle to the ground for each candidate location and the obtained one or more single point measurements from the vehicle. Determining the terrain localisation of the vehicle may then be based on the weightings applied to each of the two or more candidate locations. For example, the weightings of the candidate locations may represent how closely the theoretical terrain distance measurement for said candidate location matches the actual measurement based on the actual terrain.

In some examples, obtaining the two or more candidate locations for the vehicle comprises obtaining a particle filter estimate, wherein each particle represents a candidate location of the vehicle. Outputting the updated location estimate of the vehicle may then comprise updating the particle filter estimate. The particle filter may utilise the weightings assigned to each candidate location as discussed above.

The first location estimate for the vehicle may be obtained based on a GNSS-independent navigation system of the vehicle, for example such as an inertial navigation system of the vehicle. In some examples, the two or more candidate locations for the vehicle may be obtained based on an uncertainty margin associated with the first location estimate output by the GNSS-independent navigation system. For example, a particle filter may be initialised based on the first location estimate, wherein each particle is initialised within said uncertainty margin of the navigation system.

The vehicle may be an aircraft, optionally wherein determining the terrain localisation is based on the one or more single point measurements of the distance from the vehicle to the ground, and an indication of altitude of the aircraft at the time the one or more single point measurements were obtained.

The method may further comprise estimating uncertainty in the determined terrain localisation based on similarity and/or consistency between the theoretical distances and the one or more single point measurements.

Optionally, outputting the updated location estimate of the vehicle may further comprise implementing a Kalman filter, or other similar technique, to merge the determined terrain localisation with location estimates from other sources according to the estimated measure of uncertainty for said determined terrain localisation. For example, consistency of match may be used as a measure of positional uncertainty for fusion of the location information into the Kalman filter.

Outputting the updated location estimate of the vehicle may comprise sending the updated location estimate of the vehicle to a navigation unit. In some examples, the method sends uncertainty data associated with the updated location estimate to the navigation unit. The uncertainty data may comprise navigation uncertainty data, such as position, velocity, and/or attitude uncertainty.

In the case of a land vehicle, the skilled person will understand that, in some examples, the method may be performed without the requirement for a distance measurement sensor. For example, the land vehicle may instead rely on an altitude sensor, such as a barometer, or other sensor configured to measure the height of the vehicle in relation to sea level. By way of illustration, the method for use with a land vehicle may comprise obtaining two or more candidate locations for a vehicle and, for each of the two or more candidate locations, determining a theoretical distance from the vehicle to sea level (e.g. such as a theoretical altitude), based on terrain data. The method also comprises obtaining one or more single point measurements of an actual distance from the vehicle to the sea level (e.g. actual altitude). As described above, a terrain localisation for the vehicle may then be determined based on comparing the one or more single point measurements and the theoretical distance from the vehicle to sea level for each candidate location; and outputting a location estimate of the vehicle based on the determined terrain localisation.

In a second aspect of the invention, there is provided an unmanned aerial vehicle comprising a single beam LiDAR sensor configured to generate one or more single point measurements of the distance from the vehicle to the ground, and a processor configured to perform the method of the preceding aspect of the invention.

In a third aspect of the invention, there is also provided a method for navigation for a vehicle swarm, such as an aircraft swarm. The method comprises obtaining an updated location estimate for a first vehicle according to the method of the first aspect of the invention, and broadcasting the updated location estimate for the first vehicle to at least one second vehicle. The method then further comprises updating the location estimate for the second vehicle based on the updated location estimate for the first vehicle and an indication of the location of the second vehicle relative to the first vehicle. This may be advantageous to improve navigation estimates by communicating updated position estimates with other vehicles in the swarm. This may provide faster, more reliable navigation estimates, with fewer sensors and/or reduced computing power, because a single successful location update (or "position fix") can be used to improve the navigation estimate of multiple vehicles.

For example, a single swarm member can estimate position based on any of the methods discussed above, or any other suitable GNSS-independent navigation technique, and propagate this information to other swarm members to leverage the first position fix to improve location fixes of other swarm members.

The method may further comprise estimating uncertainty in the updated location estimate for the first vehicle, for example based on similarity and/or consistency between location estimates for other location estimates within the swarm. Updating the location estimate for the second vehicle may additionally be based on the uncertainty measure of the updated location estimate for the first vehicle.

In some examples, a ground node may act as a source of highly accurate position estimation, for example wherein a ground node may act as a stationary swarm member (vehicle) wherein its location is known.

In a fourth aspect of the invention, there is provided a system for unmanned aircraft navigation. The system comprises an unmanned aerial system (UAS), and a ground-based node, wherein the location of the ground-based node is known. The UAS may be configured to obtain the location of the ground-based node and update the location estimate for the UAS based on the location of the ground-based node and an indication of the location of the UAS relative to the ground-based node. This may be advantageous to improve navigation estimates by communicating updated position estimates with a known ground-based position from the ground-based node. This may provide faster, more reliable navigation estimates due to the "position fix" provided by the ground-based node. For example, the ground-based node may be positioned at pre-determined locations, for example where the terrain is flat, where it would otherwise be difficult for the UAS to obtain an accurate localisation estimate, for example using the methods described above.

The system optionally further comprises at least a second unmanned aerial vehicle / system, UAS, wherein the first UAS may be configured to update its location estimate based on the location of the ground-based node and an indication of the location of the first UAS relative to the ground-based node, and the location of the second UAS and an indication of the location of the first UAS relative to the second UAS for swarm navigation. In addition, the first UAS may be configured to update its location estimate based on an indication of the location of the second UAS relative to the ground-based node.

In a fifth aspect of the invention, there is provided a computer-implemented method for navigation of an aircraft. The method comprises obtaining a first location estimate for an aircraft, and obtaining one or more single beam LiDAR measurements of distance from the aircraft to the ground. The method then comprises determining a terrain localisation for the aircraft based on the one or more single beam LiDAR measurements of distance from the aircraft to the ground and a terrain map. The method then outputs an updated location estimate of the aircraft based on the determined terrain localisation and the first location estimate.

The method may further comprise selecting a first region of the terrain map based on the first location estimate, and determining the terrain localisation by comparing the one or more single beam LiDAR measurements to the first region of the terrain map. The updated location estimate may then be based on a portion of the terrain map matched to the location of the aircraft based on the comparison between the one or more single beam LiDAR measurements and the first region of the terrain map.

Using a single beam LiDAR measurement to determine a terrain localisation and outputting an updated location estimate may be advantageous to improve location accuracy, and hence navigation accuracy, in unmanned aerial systems (UASs), such as drones. This may be particularly advantageous for UASs operating in GNSS-denied environments, for example wherein the first location estimate may be obtained without the use of GNSS, such as via an inertial based navigation system. Using a single beam LiDAR measurement may be particularly advantageous for lightweight UASs as it requires fewer sensors, and importantly, less computing power on board the UAS. This therefore frees up available payload or, alternatively, can reduce the overall weight of the UAS. This may be especially beneficial to mass-produced smaller UASs that might have a short working life.

The method may further comprise obtaining a plurality of single beam LiDAR measurements, each single beam LiDAR measurement corresponding to a point in time. In said examples, determining the terrain localisation may comprise determining a two-dimensional topographic terrain estimate based on the plurality of single beam LiDAR measurements. For example, the two-dimensional topographic terrain estimate may be a line profile based on the path of the aircraft over time. The term "topographic terrain estimate" may refer to an estimate of the terrain features at the vehicle or aircraft's location, or as covered by the vehicle or aircraft's path. For example, the topographic terrain estimate may be determined based on which theoretical distance measurements (for example determined based on a terrain map) closely match one or more actual distance measurements of the distance of the vehicle or aircraft to the actual terrain.

Obtaining a first location estimate for the aircraft may comprise obtaining a first set of possible locations of the aircraft. For example, the first set of possible locations of the aircraft may be based on an error margin of a first location determination system from which the first location estimate is obtained.

The method may then comprise, for each of the first set of possible locations, obtaining a theoretical topographic terrain estimate (for example, equivalent to theoretical elevation data) at said possible location based on the topographic terrain map, and assigning a weighting to each of the set of possible locations of the aircraft based on comparing the distance from the aircraft to the topographic terrain map, in the direction of the LiDAR sensor, to the single beam LiDAR measurement from the aircraft. Outputting the updated location estimate of the aircraft may then be based on the weightings applied to each of the set of possible locations.

For example, obtaining a first location estimate for the aircraft may comprise obtaining a particle filter estimate, wherein each particle represents a possible location of the aircraft. The method may then comprise outputting the updated location estimate of the aircraft based on updating the particle filter estimate, wherein the particle filter is updated based on a comparison between the obtained single beam LiDAR measurement and the corresponding estimated LiDAR measurement, using the topographic terrain map, for each particle.

The first location estimate for the aircraft may be obtained from a GNSS-independent navigation system of the aircraft, for example wherein the first location estimate for the aircraft is obtained from an inertial navigation system of the aircraft. As noted above, the present method may be particularly advantageous for improving location estimates for navigation in environments or aircraft where GNSS navigation is unavailable.

Determining the topographic terrain estimate may be based on the single beam LiDAR measurement and an indication of altitude of the aircraft at the time the single beam LiDAR measurement was obtained.

Outputting the updated location estimate of the aircraft may comprise sending the updated location estimate of the aircraft to a navigation unit.

In a sixth aspect of the invention, there is provided an unmanned aerial vehicle comprising a single beam LiDAR sensor, and a processor configured to perform the method of the preceding (fifth) aspect of the invention.

In a seventh aspect, there is provided a system for unmanned aircraft navigation, the system comprising an unmanned aerial vehicle, comprising a single beam LiDAR sensor, and a ground-based node configured to perform the method of the first or fifth aspect of the invention.

In an eighth aspect of the invention, there is provided a method for navigation of an aircraft swarm. The method comprises obtaining an updated location estimate for a first aircraft, for example, according to the method of the first or fifth aspect of the invention, and broadcasting the updated location estimate for the first aircraft to at least one second aircraft. The method then comprises updating the location estimate for the second aircraft based on the updated location estimate for the first aircraft and an indication of the location of the second aircraft relative to the first aircraft. This may be advantageous to improve navigation estimates by communicating updated position estimates with other aircraft in the swarm. This may provide faster, more reliable navigation estimates because a single successful location update (or "position fix") can be used to improve the navigation estimate of multiple aircraft.

The method may further comprise flying the first aircraft at a first altitude to obtain the single beam LiDAR measurement from the first aircraft, and flying the at least one second aircraft at a second altitude, wherein the second altitude is higher than the first altitude. This may be advantageous because LiDAR sensors typically have a limited range which is generally below the optimum flight altitude. A low flying swarm is disadvantageous, not least because collision risk is increased at low altitudes. As such, the present method may be advantageous by allowing the location estimate to be updated for the swarm using LiDAR, whilst only requiring the first aircraft to fly at the more dangerous lower altitude, thereby reducing the risk exposure for the rest of the swarm.

In some examples, the method may further comprise descending the first aircraft to the first altitude for a first time period to obtain the single beam LiDAR measurement from the first aircraft, and ascending the first aircraft to a third altitude for a second time period, wherein the third altitude is higher than the first altitude. The third altitude optionally may be the same as the second altitude. Ascending and descending the first aircraft may be advantageous to reduce the risk exposure of the first aircraft by flying at the lower first altitude to obtain the LiDAR measurement. For example, the LiDAR measurements may be obtained periodically to update the location estimate, wherein navigation is based on inertial navigation (or other navigation method, preferably GNSS-free) in between LiDAR measurements.

In a ninth aspect of the invention, there is provided a computer program product comprising instructions configured to program a programmable processor to perform any of the methods of the preceding aspects of the invention.

### Drawings

Embodiments of the disclosure will now be described, by way of example only, with reference to the accompanying drawings, in which:
Fig. 1 shows a block diagram illustrating an architecture diagram for an example terrain localisation system of the present invention for use with a vehicle, such as an aircraft.
Fig. 2 shows a block diagram illustrating an example method for navigation of an aircraft, for example suitable for use by the terrain localisation system of Fig. 1.
Fig. 3 shows a block diagram illustrating an architecture diagram for an example LiDAR-based terrain localisation system of the present invention, for example such as a type of terrain localisation system of Fig. 1.
Fig. 4 shows a block diagram illustrating a method for use with a LiDAR-based terrain localisation system of the present invention, for example such as the system of Fig. 3.
Fig. 5A illustrates an example flight path of an aircraft overlaid onto a terrain map. Fig. 5B illustrates an example two-dimensional LiDAR line profile for terrain localisation, based on LiDAR data measured during course of the flight depicted in Fig. 5A.
Fig. 6A illustrates two example flight paths for two aircraft overlaid onto a terrain map. Fig. 6B illustrates an example two-dimensional LiDAR line profile for terrain localisation of one of the two aircraft, based on LiDAR data measured by one of the aircraft during course of the flight depicted in Fig. 6A. Fig. 6C illustrates an example two-dimensional LiDAR line profile for terrain localisation of the other of the two aircraft, based on LiDAR data measured by the other aircraft during course of the flight depicted in Fig. 6A.
Fig. 7 illustrates a schematic comparing the effects of simulating a particle filter using a velocity estimate from a GNSS-free navigation system and an adjusted velocity estimate.
Fig. 8 illustrates simulation data comparing the position estimates obtained by the method of the present invention, for example based on Fig. 4, and position estimates obtained from a navigation system with a constant linear navigation error growth rate of 2 m/s, such as an inertial navigation system independent of GNSS.

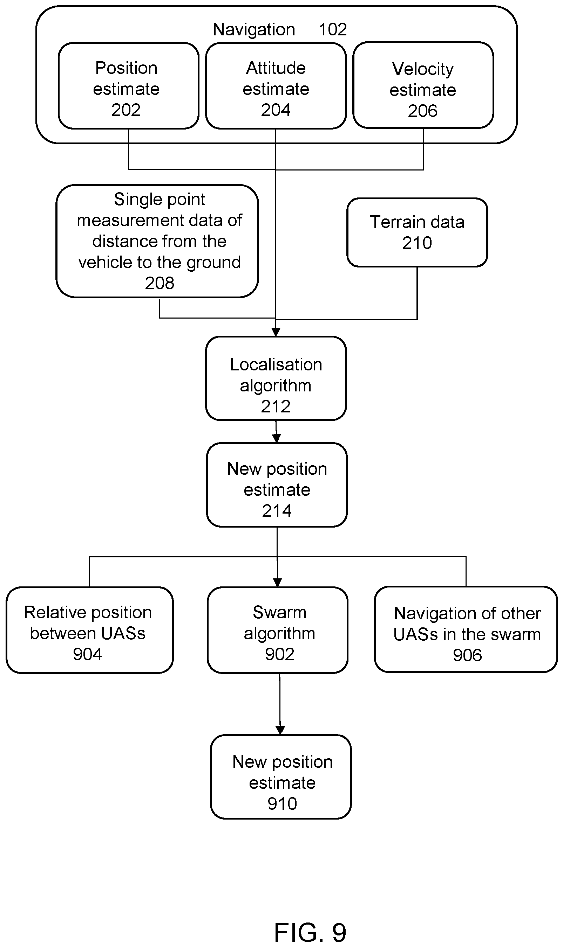

Fig. 9 shows a block diagram illustrating an example method for obtaining position estimates for a swarm of vehicles, such as a swarm of UASs, for improved swarm navigation.

### Specific description

Embodiments of the claims relate to systems and methods for location estimation of a vehicle for navigation, in particular using single beam LiDAR for aircraft navigation.

An example navigation solution that uses single-point aircraft height measurements to increase positioning accuracy in GNSS-denied conditions is described below.

The term elevation is intended to refer to the height of a point on the Earth's surface above a given level, usually sea level.

The term altitude is intended to refer to the height of the aircraft above a given level, usually sea level.

The height of the aircraft may refer to the distance between the aircraft and the Earth's surface directly below said aircraft.

A single-beam LiDAR measurement may be defined as providing a one-dimensional (1D) and/or single point LiDAR measurement.

The term "topographic terrain estimate" may refer to an estimate of the vehicle's location, for example in 3-dimenstional (3D) space, in which theoretical distance measurements from that location (for example determined based on a terrain map) closely match one or more actual distance measurements of the distance of the vehicle or aircraft to the actual terrain.

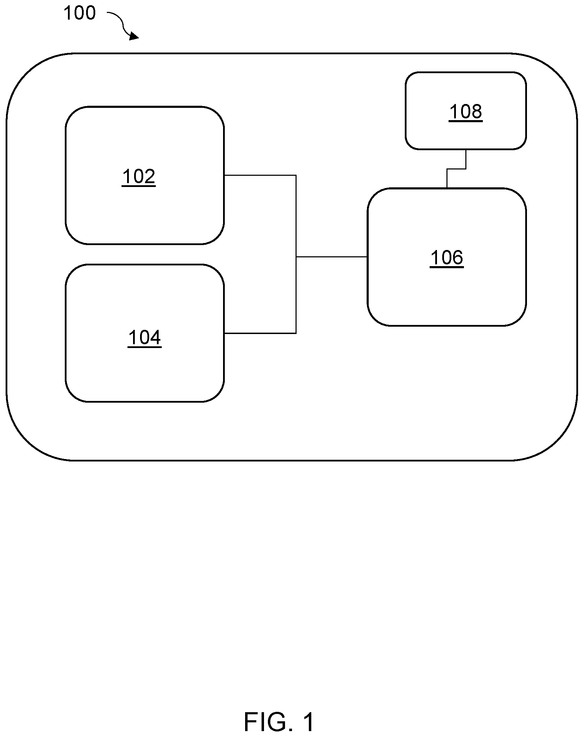

Fig. 1 shows a block diagram of an example aircraft 100, such as a UAS. The aircraft 100 comprises a GNSS-free navigation system 102, such as an inertial navigation system. The aircraft 100 further comprises a sensor 104 configured for single point measurement of the distance from the aircraft to the ground (e.g., configured for single point measurement of the height of the aircraft from the ground). For example, the sensor 104 may be a single-beam LiDAR sensor, altimeter, or other suitable sensor. The sensor 104 is coupled to a processor 106. The aircraft 100 also comprises a memory 108 configured to store terrain data.

The processor 106 is configured to determine a position or location estimate of the aircraft 100 based on the measurements from the single-point measurement sensor 104. The processor 106 is also configured to feedback the position or location estimate derived from the sensor measurements to the navigation system 102 to relocalise the position of the aircraft 100 used for navigation.

In use, the sensor 104 records measurements of the distance between the terrain and the sensor 104 itself mounted on the aircraft 100. With information of the aircraft's 100 estimated position and attitude obtained from the GNSS-free navigation system 102, the processor 106 uses the sensor data to compare against terrain data stored in the memory 108, in order to re-localise the navigation estimate of the aircraft 100.

In more detail, the sensor 104 will record measurements over a time period during flight. The sensor data obtained will therefore correspond to a line of points in 3D space. The altitude of the aircraft 100 will be deduced from sensor readings, for example a barometer, in combination with the terrain data and the navigational fix obtained from the GNSS-free navigation system 102. This is described in more detail below.

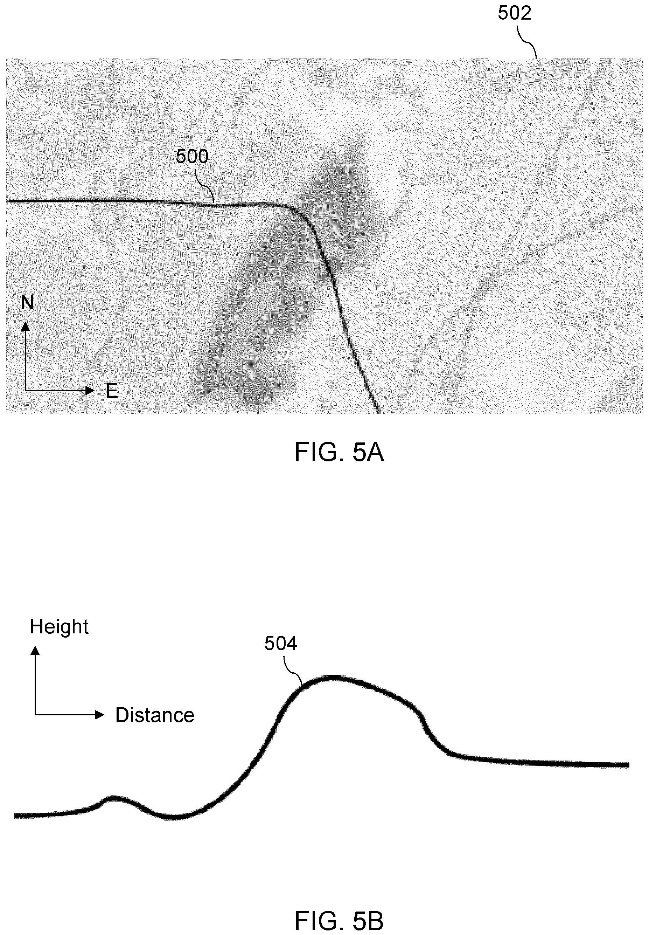

By way of illustration, Fig. 5A illustrates an example flight path 500 superimposed over an elevation (terrain) map 502. Meanwhile, Fig. 5B illustrates example elevation data 504 obtained by a LiDAR sensor, during the flight illustrated by Fig. 5B, after correcting for attitude and pitch of the aircraft. Whilst the sensor is configured to obtain single point elevation readings, over the course of the flight these single point readings can be combined into a 2D elevation profile of the flight path. Whilst the example provided in Figs. 5A and 5B refers to LiDAR measurements, the skilled person will understand that other single point ground distance measurements may be used.

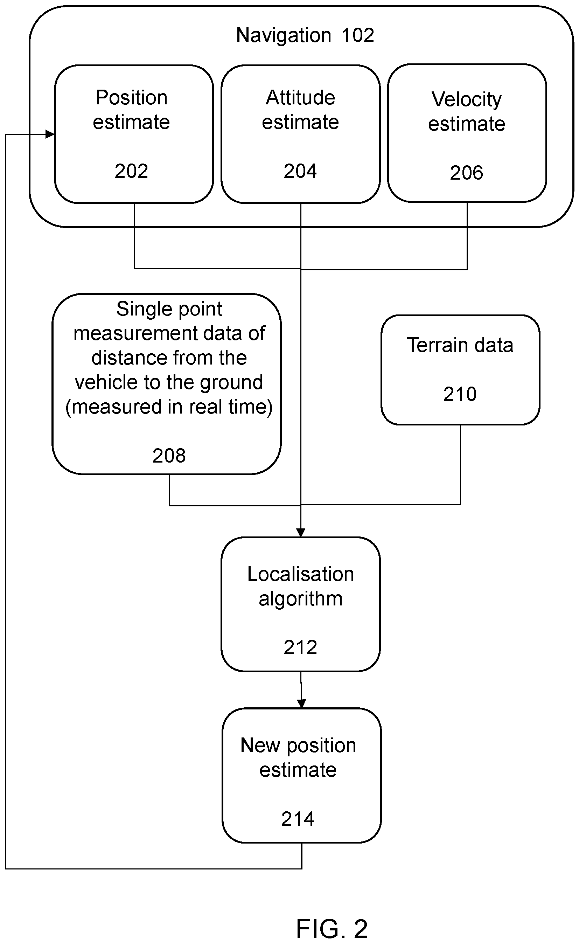

Fig. 2 illustrates an example workflow of a position estimate method of the present invention, for example for use with the aircraft of Fig. 1.

The algorithm is initialised with a position estimate 202. The first iteration will have an estimate 202 provided by the onboard navigation system 102, such as a GNSS-independent inertial navigation system (external to sensor 104). In this example, the method will be described with reference to a particle filter approach. This information, together with a position covariance estimate also provided by the navigation system 102, will be used to create a virtual point cloud using localisation algorithm 212. Each point in the virtual point cloud represents a possible location of the aircraft, for example wherein the points are created from the obtained position estimate from the navigation system and the covariance estimate.

The virtual point cloud will be compared to terrain data 210, such as a terrain map for the area, in order to assign each point within the point cloud to a theoretical distance from the ground to said point, using the attitude estimate 204. The localisation algorithm 212 then compares the virtual point cloud and theoretical distances to the sensor measurements 208 obtained from the single point distance sensor 104. This comparison will yield an updated position estimate 214, which will then be fed to the next iteration of the algorithm 202.

In this example, the method will be described with reference to a particle filter approach. A particle filter is an estimation process where a set of "particles", each one representing a hypothetical state of the system, is created. These particles then evolve over time as raycasts are created from the particles or points. Each particle has probabilities or weights associated with them representing the relative probability that a given particle is an accurate representation of the state it is representing. These weights are generated by a measure of "fitness" for a given particle based on measurements. Over time, the particles should then get filtered and slimmed down until the distribution they create tightly surrounds the actual state and uncertainty of the system. For the purposes of the present invention, the state of interest is the position of the vehicle, in this case aircraft 100. In the case of an aircraft, such as a UAS, the state will consist of north, east estimates. The measurements are the sensor readings, and so the weights are generated by a comparison between the sensor readings, and an estimate for what the sensor should return based on a terrain map, and hypothetical position and attitude. This is discussed in more detail below.

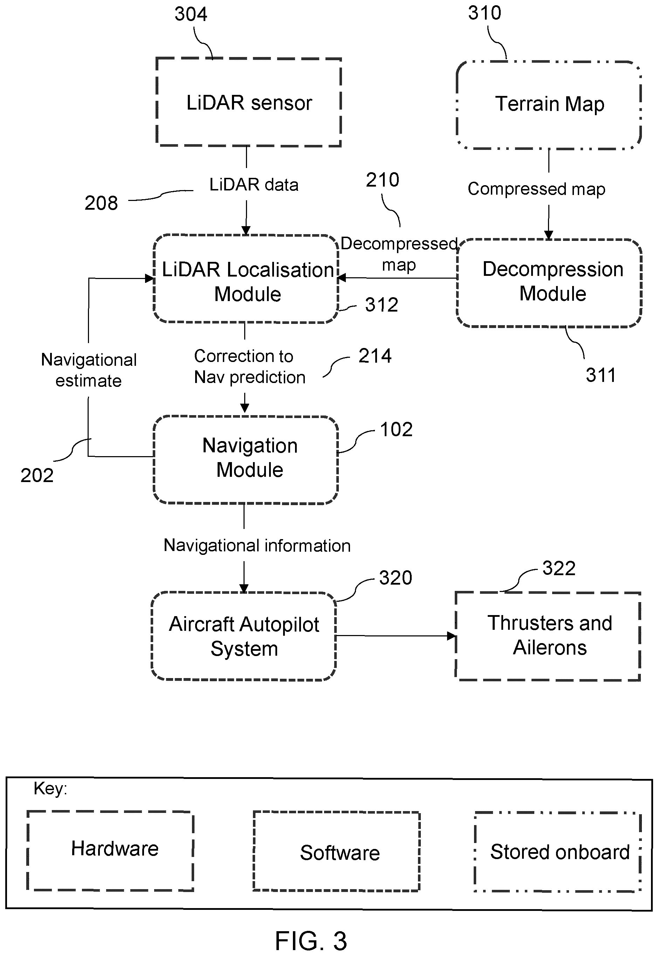

Fig. 3 shows a block diagram illustrating an architecture diagram for a terrain localisation system, for use with an aircraft such as the aircraft 100 of Fig. 1, wherein the sensor 104 is a single-point LiDAR sensor 304. The LiDAR sensor may have an operational range of 40 metres or more, and/or may be configured to measure distance through the Time-of-Flight method, where distances are obtained by measuring the time it takes for the laser beam to hit the object it is measuring and come back to the receiver. In the example shown in Fig. 3, the aircraft 100 may be a UAS, however the skilled person will understand that other aerial vehicles may be used.

A LiDAR localisation module 312 is run by a processor, such as processor 106.

As shown, a LiDAR localisation module 312 is configured to obtain a navigational estimate 202 from a navigation module 102 of the aircraft. In the example shown, the navigation module 102 is a GNSS-independent inertial navigational module.

The LiDAR localisation module 312 is also configured to obtain sensor data 208 from a single-beam LiDAR sensor 304 mounted on the aircraft.

In addition, the LiDAR localisation module 312 is configured to obtain terrain data 210 from a stored terrain map 310. Optionally, the terrain map 310 may be stored by an internal memory 108 of the aircraft in a compressed state, wherein the terrain map 310 is configured to be processed by a decompression module 311 in order to extract decompressed terrain data 210. Storing the terrain map in a compressed state may be advantageous to optimise data storage and map resolution. For example, the higher the map resolution, the more accurate the best possible localisation, however storing large maps at up to 1 metre resolution would require an excessive amount of data being stored on the aircraft. Compressing the terrain maps enables large swathes of land to be stored, allowing for maximum flexibility. Preferably, different areas of the map would be compressed individually. An area of the map can then be decompressed as the aircraft enters said area. Further compression would then be possible to get the size down even further. This will make the terrain maps more manageable in size, allowing more to be stored on a given aircraft, and increasing the range of the navigation system.

Alternatively, the skilled person will understand that other methods of map storage may be used. For example, external memory storage may be implemented on the aircraft to accommodate large map storage in an uncompressed state. Alternatively, small sections of the map, so called "islands of detail", may be stored, or data only for expected flight plans and possible variations, however these approaches may add restrictions to the flight path during use and are therefore likely to be less desirable.

Flight test data using 2 metre resolution maps have achieved around 20 to 40m error on average.

In use, the LiDAR localisation module 312 is configured to determine an updated location estimate 214 for the aircraft based on comparing the LiDAR data 208, the navigational estimate 202 from the inertial navigation system 102, and the terrain data 210.

The updated location estimate 214 is output to the aircraft navigation module 102, which is in turn output to the aircraft autopilot system 320. The aircraft autopilot system 320 is configured to adjust the control of aircraft thrusters and/or ailerons 322 accordingly based on the updated location estimate 214.

The navigation module 102 may then feedback its updated location estimate 214 into the LiDAR localisation module 314 again and the method is repeated. The method therefore continues to relocalise and update the navigational estimate for the aircraft throughout its flight.

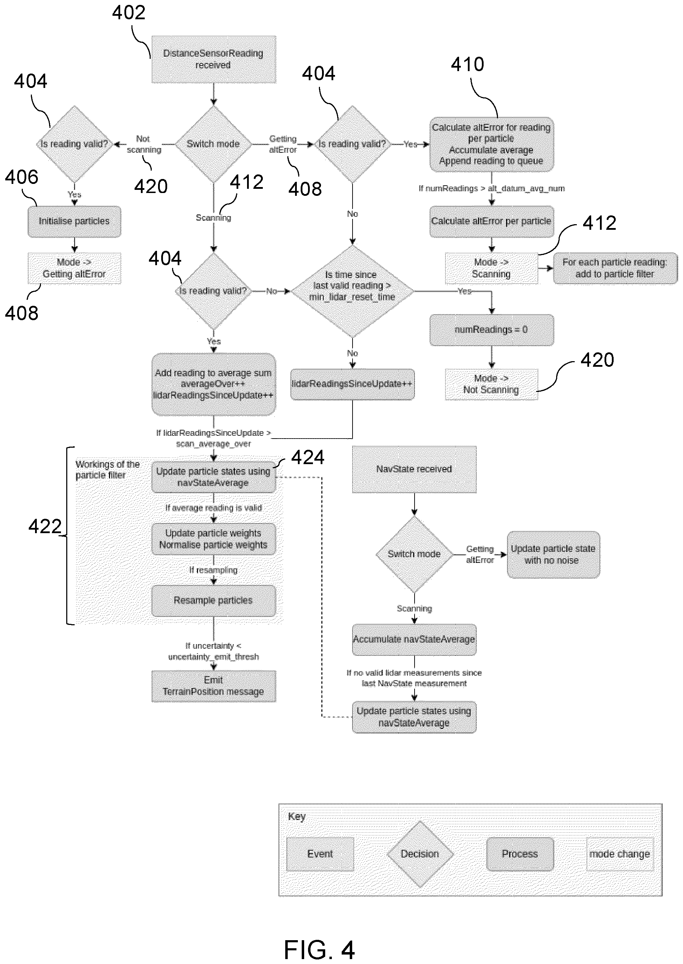

An example method of terrain localisation is shown in more detail in Fig. 4. In particular, in this example the aircraft location is estimated utilising a particle filter estimate, wherein each particle represents a candidate (hypothetical) location of the aircraft.

A particle is defined to be a hypothetical position for the aircraft in 2D. It will be represented in local coordinates (North, East; NE). The state of a particle is this position. This will also include an altitude value, given relative to the aircraft. There is no requirement that the aircraft altitude will stay constant over the course of a scan. Adding the altitude into the particle state would increase the overall number of particles required. Thus, preferably, the method is configured to give an error in the altitude measurement per particle ("AltError"). A function is provided to get the altitude of a particle given the AltError, discussed in more detail below in relation to "GettingAltError".

A processor 106 is configured to receive a measurement of distance from the aircraft to the ground from an onboard sensor 104, such as a single-beam LiDAR sensor.

The processor 106 is configured to have three states: (i) Not Scanning (NotScanning), (ii) Obtaining Altitude Error (GettingAltError), and (iii) Scanning.

In the event that there has not been a valid sensor measurement within a minimum time window (min_lidar_reset_time), the processor is configured to transition into the "NotScanning" state (420). This may be advantageous because, if readings are invalid for too long, the particles may drift with respect to the drone's position. This could lead to Particle Filter Divergence - a phenomenon where no particles reflect the true state of the system. As such, in the present case, if the time since a valid measurement exceeds the time window, min_lidar_reset_time, the processor is transitioned into "NotScanning" state (420), and the particle filter will be reset.

Upon receiving a measurement (402), the processor 106 determines whether the obtained measurement is valid (404). The validity determination may be based on a comparison between the obtained measurement and a threshold or range of expected valid measurements. If the measurement is determined to be invalid, it is ignored.

Upon receiving a first valid measurement, the processor is configured to initialise a set of particles (406). The initial particles can be drawn from a gaussian distribution with a covariance matrix of north and east uncertainty. The processor then transitions into the "GettingAltError" state (408). In this mode, the processor determines the average altitude error per particle (410). This will then become the altitude offset from the navigation systems altitude estimate that a given particle is assumed to be moving at. These readings will also all be input into a queue for processing through the particle filter.

In more detail, the LiDAR sensor can give an estimate of the height from the ground, when combined with the navigation system's attitude estimate. This can be used in conjunction with a ray cast onto the terrain map at the particle's location, to construct an estimate for the altitude of a given particle. However, using a single scan to do this would make it extremely sensitive to noise. Thus, a predefined number of measurements (wherein "alt_datum_avg_num" refers to the predefined number) is used to construct an estimate for altitude of a given particle. The altitude estimate for each particle is then split into the navigation systems estimate + an error term. The error term can then be used for future operations if the altitude of the vehicle changes.

When constructing this average, the aircraft will be moving through the air, and potentially increasing in altitude, so it will not be possible to merely subtract the sensor return from the value obtained by the terrain map.

For a given reading, the approximate altitude error is: $err \left({x}_{alt}\right) = \left({l}_{s}-{l}_{m}\right) cosθ$ where θ is the angle the aircraft makes to the horizontal; *lₛ* is the measurement from the sensor; and *lₘ* is the measurement from the terrain data map for said particle (using NE coordinates from the particles, and attitude (denoted as "D") from the inertial navigation system).

The predefined number, alt_datum_avg_num, of these readings will then be averaged to construct an estimate for the altitude error, *err*(*xₐₗₜ*), of a given particle. The altitude error estimate for a given particle, *down_{particle}*, will then be defined as: ${down}_{nav} + err \left({x}_{alt}\right) = {down}_{particle}$

The processor is configured to transition into the "Scanning" state (412) once the number of valid readings exceeds a threshold (alt_datum_avg_num). At this point, all particles up to this point will be processed.

During "Scanning mode", the LiDAR sensor collects a series of measurements across a time frame. Preferably, the time frame is configurable.

The LiDAR measurements are then fed into a particle filter simulation (422) by the processor to update the particle states.

k will index over the LiDAR measurements input, and thus the generation of particles. Therefore, *x*_{*k*=0} denotes the first set of particles, *x*_{*k*=1} the second set, and so on. *i* will index into the particles themselves. Thus *x*_{*i*=0} will denote the first particle. As such, x*_{k,i}* denotes the state of the *i*^{th} particle in generation *k*.

When a particle's state is updated (424), the velocity of the aircraft needs to be taken into account, the new position *x*_{*k*+1,*i*} being that of the previous state, summed with the velocity the aircraft is moving at: ${x}_{k + 1 , i} = {x}_{k , i} + {{v}^{˜}}_{k , i} {δt}_{k}$

Noise is then preferably added, so that the particles can move around in the space, thereby increasing or decreasing their respective fitness. This noise should be based on the noise on the vehicle velocity from the aircraft navigation system (such as the inertial navigation system). Preferably, the noise is the noise on the vehicle velocity from the aircraft navigation system multiplied by a small amount (velocity_dev_mult) to make the particles spread out over time. This means that when a new measurement is input, the state *x*_{*k+*1,*i*} of the *i*^{th} particle in generation k will be drawn from a gaussian distribution with the following properties: ${μ}_{k + 1 , i} = {x}_{k , i} + {{v}^{˜}}_{k + 1 , i} {δt}_{k}$
where *ṽ*_{*k+*1,*i*} is the estimated velocity of the aircraft, and *δtₖ* is the time since the previous measurement. ${σ}_{k + 1} = {δt}_{k} ⋅ {σ}_{v}$
where *σᵥ* is noise (such as velocity_dev_mult multiplied by the uncertainty from the navigation system.

The altitude from the navigation system cannot be assumed to be correct due to pressure changes. However, keeping the state as a 2D entity is desirable. Thus the initial few readings from the LiDAR sensor in conjunction with ray casts from the NE coordinates of the particle and D coordinate of the aircraft will be used by the processor to construct an estimate of the altitude for a given particle. This altitude measurement then does not change relative to the aircraft. As the aircraft increases in altitude, the altitude reading should follow it exactly. Thus this will be represented as an altitude error, rather than an absolute altitude.

There are then two choices for *ṽ_{k,i}*. It could simply be the estimate from the navigation system (*vₖ*). However, a given particle will have an associated navigation error of: $Δ {x}_{k , i} = {x}_{k , i} - {x}_{nav , k}$

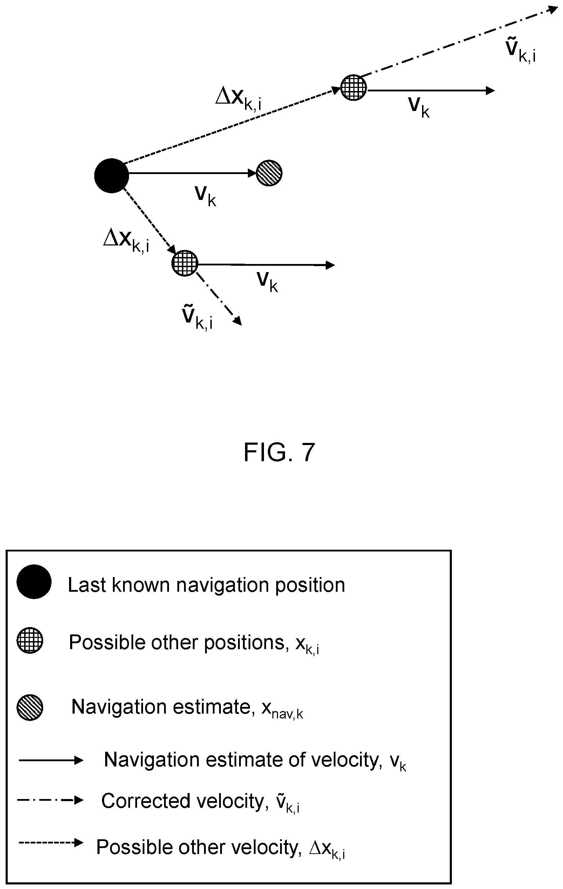

It could be assumed that this navigation error is the result of a systematic error in the velocity of the drone since the last scan was taken. Adjusting for this would set: ${{v}^{˜}}_{k , i} = {v}_{k} + \frac{Δ {x}_{k , i}}{τ}$ where is τ the time since the last navigational fix. The latter is a trivial extension of the former, and will preferably be used as it is likely to be marginally more accurate. This adjustment will only happen if the time since the last fix is less than a configured time duration ("adjusted_velocity_max_time"). It will also only happen in the north and east directions. An extreme example of this is shown in Fig. 7 which illustrates the difference between simply using the velocity estimate from the navigational system, *vₖ*, and the adjusted estimate using ${{v}^{˜}}_{k , i} = {v}_{k} + \frac{Δ {x}_{k , i}}{τ}$. In the example shown in Fig. 7, the particle filter is shown to use a velocity estimate from a GNSS-free navigation system, such as the inertial navigation system set out in EP4328595A1, and the adjusted velocity estimate.

The weights assigned to each particle are then a measure of how likely it is to see a given lidar reading, given an estimate of our position, multiplied by a likelihood of our altitude being incorrect by a given amount. This will be given by: 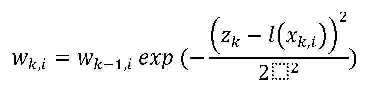 where σₗ ("lidar_deviation") is the expected deviation of a given lidar reading; I(x_{k,i}) is the result of a ray cast from a given particle; and zₖ is the reading from the sensor at the kth iteration. Any multiplicative constants get removed when the weights are normalised so the gaussian will not be normalised. Note that this means, until resampling occurs, w_{k,i} maintains an estimate of the probability of an overall particle being correct, assuming all measurements are independent.

Any changes in attitude will be taken into account within the gaussian used in going from a given state to the next, but the deviation is linear in time.

There is also the problem of sample degeneration, where one weight tends to 1, and the rest tend to 0. To solve this, resampling is introduced, where a new set of particles is generated from the probability distribution created by the weights from the old set. Systematic resampling is used in this example, however the skilled person will understand that other methods of resampling may be used. Resampling has a computational cost and does not need to happen every iteration, rather it is sufficient to resample when the weights get biased, and one grows in magnitude when compared with the others.

As such, for each iteration, the LiDAR reading and navigation velocity and attitude estimate from the GNSS-independent system will be passed in. The velocity from the navigation system will be used to update the state of each particle. Then, for each particle, a ray cast will be performed from the hypothetical position represented by the particle. This hypothetical lidar measurement will then be compared against the reading from the actual sensor, and used to update the weights. The positional fix is then based on the weighted combination of all the particles, and is output by the processor upon a resampling event if the uncertainty is below a specified threshold, "uncertainty_emit_thresh".

The position estimate from the terrain navigation system can be fed back to the navigation system.. The covariance of the positional update can be used by the navigation system, when incorporating the output of the terrain navigation system, so that the update has the correct uncertainty associated with it.

For the type of low-cost single beam LiDARs envisioned in these systems, the maximum range is typically no more than 40 metres above ground level, however this is typically too close to the ground safety-wise for general flight. This is due to an increased risk of collision with buildings and electricity pylons, etc., at said height. Furthermore, in a hostile environment, a UAS could easily be neutralised if it flies constantly at such a low height. Thus, in use, a UAS will typically fly at a higher altitude using inertial navigation for a first time period, such as five minutes. During such times, the processor will be in "NotScanning" state. Eventually, navigation error is expected to reach or exceed a defined threshold. At that point, the UAS will descend to LiDAR range for a shorter period of time, for example approximately 30 seconds. The LiDAR sensor will collect a plurality of distance measurements to the ground during this time, and the processor will then transition to "scanning" mode and attempt re-localisation with the LiDAR. Once the scan has completed, the UAS will then ascend back to higher altitude. This pattern will be repeated throughout the flight of the UAS. However, the skilled person will understand that this example concept of operation is not limiting and that other concepts of operations may also be used. For example, the skilled person will understand that the aircraft or UAS may be operated continuously at any altitude provided that the sensor for obtaining measurements of distance from the ground is in range of the ground.

In order for the present method of positional estimation to run relatively quickly, it may be run on a different thread to the navigation flight code. This thread can run concurrently with the flight code all the time, working out the position estimate.

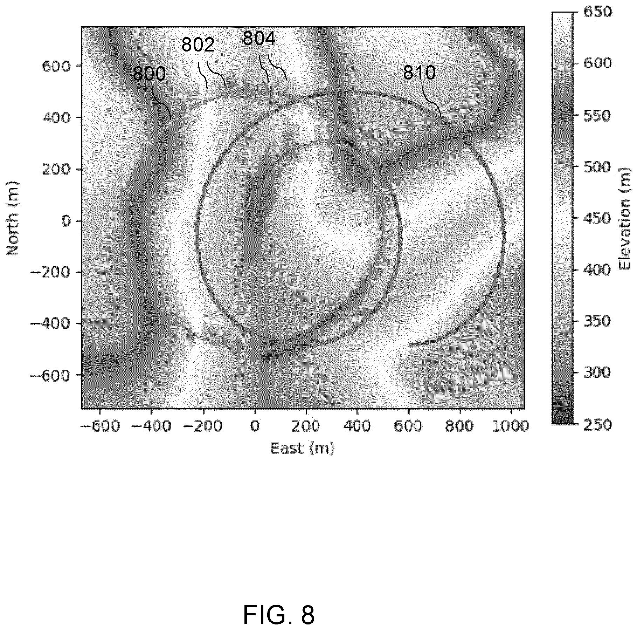

Fig. 8 illustrates the results of a simulation test run according to the method described above in relation to Fig. 4.

Line 800 represents the actual trajectory of a UAS during the simulation. The small points 802, and associated ellipse shaded area 804, represent the fixes and covariance that the particle filter is obtaining at each step. It can be seen that the covariances are higher in the directions of the map that are flatter, as the algorithm will not have a preference for a particular point in a flat direction. The second line 810 represents a navigation system with a constant linear navigation error growth rate of 2 m/s, such as an inertial navigation system independent of GNSS. This gives a perspective on how accurate the particle filter is in simulation, compared to an inertial-based, GNSS-free navigation system that will invariably drift over time. It also demonstrates that the terrain navigation can still work, even with errors in the velocity estimates which are used as inputs into each iteration of the particle filter. This is indicative of how capable the use of LiDAR (or other single point height sensors) with the particle filter is to reduce accumulated navigation errors from inertial-based GNSS-free navigation systems. It is noted that the LiDAR algorithm's estimated position (points 802) is not fused with any other navigation, however it is initialised with no navigation error.

Whilst the examples above disclose an approach utilising a particle filter to determine location, the skilled person will understand that this is not intended to be limiting and that other approaches may be used.

For example, other cost based approaches may be used. Taking the sum over the vertical distances between each point in a scan and the underlying map could be used to approximate the vehicle location. This ignores beam dispersion, but some corrections could be made. These would be dependent on the form of the map. A constrained optimisation algorithm may then be used, with the variables to optimise being positional and rotational error. Merely as an example, the optimisation algorithm could include:
(i) *Baseline algorithm*: A base algorithm is a brute force search based on a comparison with terrain data. For example, a baseline algorithm may be configured to match a line derived from the measured height data (such as that shown in Fig. 5B) during flight to terrain data to determine the location of the flight path. The terrain data may comprise a 2D grid of terrain height values, at approximately 1m resolution. The measurement data may comprise 3D terrain polyline point. To reduce computing power, the algorithm may assume high vertical position uncertainty, and match purely based on matching the shape of the 3D polyline to the gradients of the terrain data.
(ii) *Particle filter.* As discussed above, this implicitly models the cost function, hypothesising points to sample based on the previous sample-cost pairs.
(iii) *Bayesopt:* Where the previous option implicitly models the cost function, this models it explicitly, using that model to suggest the next points to sample.

The above options would require the map to be stored explicitly, in some form or another. Alternatively, a descriptor-based approach may be used. In this approach, a descriptor or feature vector would be generated for the scan and then compared against descriptors for the map. The map could therefore be stored in the form of a set of descriptors. The alternative would be to explicitly store the map, and then generate the descriptor from the map as well.

Alternatively, a fine-tuning based method may be used. In this case, an Iterative Closest Point algorithm may be used. This may be particularly advantageous for use in situations where there is already a good idea of the location of the drone. This would then fine-tune the location, further reducing the error associated with a given localisation attempt.

### Swarm navigation

The skilled person will understand that the methods for improving location estimates for navigation of a single vehicle discussed above may also be applied to swarm navigation.

A swarm is defined, for the purposes of this example, as two or more UAS flying in formation, not necessarily in a defined shape but travelling in the same general direction. It will be necessary to closely monitor each of the vehicles' positions at all times to avoid possible collisions. The precise distance that the UAS in the swarm will need to maintain will be mission, platform and terrain dependent.

For example, each UAS within the swarm will have a GNSS-independent navigation system, such as an inertial navigation system, and a single-beam LiDAR, or other single point distance sensor, installed on it. The UASs will be flying at height using its GNSS-independent navigation and descending to LiDAR range for short intervals in order to do a scan of the terrain, compare it to a map of the area and obtain a position estimate of the vehicle through LiDAR readings, using the single UAS LiDAR navigation solution disclosed herein. This position estimate can then be shared with other UASs within the swarm, thus increasing the navigational accuracy of the swarm over the length of the mission. This also means that each UAS can descend to conduct a scan at an appropriate time, for example when it is likely overflying featured terrain, and/or there are not any obstacles or threats nearby.

Alternatively, each UAS within the swarm will have a GNSS-independent navigation system, such as an inertial navigation system, and at least one UAS will additionally have a single-beam LiDAR (or other single point distance sensor), installed on it. In such examples, at least one UAS within the swarm comprising the single-beam LiDAR sensor will descend to LiDAR range for a short period of time, where the enhanced swarm relocalisation algorithm will run, before it ascends back to higher altitude. This position estimate can then be shared with other UASs within the swarm, and this relocalisation behaviour can be repeated throughout the flight. This may be advantageous in heterogeneous swarms as not all vehicles in the swarm will require the LiDAR sensor (or other single point distance sensor).

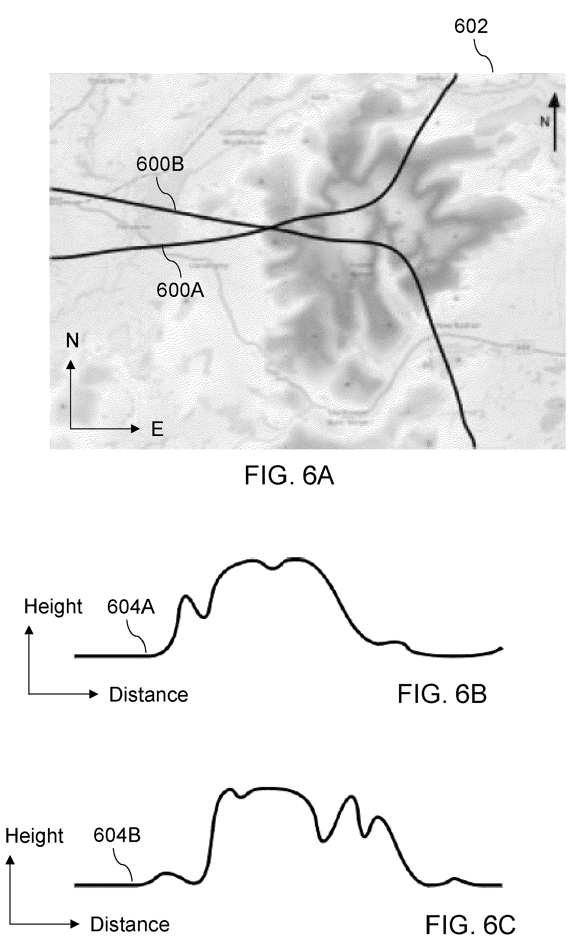

Fig. 6A shows example flight paths 600A and 600B for a pair of UASs, superimposed over a terrain map 602. Both UASs are travelling from the west. Each UAS is obtaining distance measurements to the ground. Fig. 6B shows example elevation data 604A obtained from a first UAS travelling from west to north along flight path 600A. The elevation data 604A is obtained based on LiDAR sensor data from said UAS, after correcting for pitch and altitude of the UAS. Fig. 6C shows example elevation data 604B obtained from the second UAS travelling from west to south along flight path 600B. The elevation data 604B is obtained based on LiDAR sensor data from said second UAS, after correcting for pitch and altitude.

Having a plurality of aircraft taking readings from the ground, rather than one single aircraft, is likely to increase the accuracy and resilience of the overall localisation method and system. For example, one of the benefits of the swarm system over a single UAS is that the probability of obtaining relocalisation of a single UAS within the swarm increases. This probability is increased more widely when increasing the number of UASs in the swarm. When the relative positioning between UASs is known, this enables other UAS in the swarm to improve their navigation estimates too.

In principle, this requires that the UAS communicate to one another or, in bigger swarms, to nearest neighbours.

In order to combine the terrain navigation information from multiple UAS in a swarm, there are a few different high level options, including:
a) Combine all the LiDAR measurements from each UAS, and use the same particle filter (or other) approach as with one UAS, noting however the state and measurements represent each UAS in the swarm.
b) Each UAS estimates its own local position from the LiDAR data. This is then combined with an estimate of the relative positions of the UAS to update each UAS's local measurements.
c) Leverage knowledge of the relationship between navigation errors on different UAS in the swarm. It is known that certain components of navigation error for GNSS-free systems are not independent of each other across UAS, for example as set out in EP4328595A1. This information could theoretically be used to reduce the navigation error over the swarm.

Option (a) seems, a priori, like the most natural extension to the single-UAS approach. It would allow the use of distributed computing for the particle filter, as the UAS could divide the computational load amongst them. However, the particle filter for a single UAS is two-dimensional. If it is directly extended to include multiple UAS, it becomes a multidimensional particle filter, e.g. extending for a swarm of three aircraft would result in a six-dimensional particle filter. As the accuracy of the particle filter is compromised when its dimension increases, to maintain accuracy the number of particles captured in the scan would need to increase exponentially. This increases the computational cost of the algorithm.

Option (c) can in principle be advantageous if the UAS's navigation errors have an easy-to-deploy and well-known model. However, as the LiDAR algorithm of the present invention is navigation system-agnostic, the errors in navigation are going to be sourced in the GNSS-free navigation system. The errors embedded in a navigation system are therefore not only dependent on the precise navigation solution at use, but also very complex to model. This would make option (c) operationally difficult to implement.

Thus, option (b) is likely to be most preferred. The main downside of this is that it requires knowledge of the relative position of the UAS in the swarm, however it is reasonable to expect that this information would be available as the skilled person is aware that there are many ways to obtain it. For example, it could be estimated from the latency in communication between UAS, or from on-board cameras. A common approach is to use Radio-Frequency Communications between UAS to generate pairwise distance estimates for all UAS in the swarm. This can then be used with a Multidimensional Scaling Algorithm (MDS) to create a set of relative position estimates. Once the relative position information is available, option (b) has significant advantages.

For example, option (b) provides a distributed LiDAR sensor, where each UAS shares the computation used to update its local particle filter, and then the information can be efficiently shared to make up for shortcomings at different points in the swarm. The algorithm would conceptually work as follows:
1. A UAS does a scan where it gets a fix of position via the LiDAR system, which is used to update its navigation estimate.
2. The UAS sends this navigation estimate to the other UAS in the swarm.
3. Each UAS, armed with their navigation estimate, relative positions, and the navigation estimate of any other UASs that completed a scan, corrects accordingly their position estimate.
4. This new position estimate gets fed back into the navigation system.

It is noted that relevant statistical techniques may be employed to ensure that covariances and statistical weights are taken into account to minimise errors.

An example method is depicted schematically in Fig. 8. This algorithm now forms the swarm of UASs into a distributed sensor. The computation for the terrain navigation is shared across each UAS, with each UAS performing the updates for its own measurements. These local estimates are then disseminated throughout the swarm, taking into account the certainty of position fixes, using appropriate statistical methods to combine them. As an example, if only one UAS gets a position fix, the other UASs will weigh that estimate as the most significant when updating their own position estimate. Over a few iterations, this will aid them in getting a position fix for each.

In the particular case where an inertial navigation system is being used as the GNSS-free navigation system, it is expected that the LiDAR's fix is combined with navigational position estimate to increase the accuracy of the position estimate prior to sharing with the other UASs and readjusting their own position estimates.

Whilst the examples above disclose an approach utilising a LiDAR sensor to determine location, the skilled person will understand that this is not intended to be limiting and that other sensors may be used, including for example any sensor configured for measurement of the distance from the aircraft to the ground (e.g., configured for single point measurement of the height of the aircraft from the ground, such as for example an altimeter, or other suitable sensor).

The skilled person will also understand that references to the distance from the vehicle to the ground (including determined theoretical distances and/or measured actual distances from the vehicle to the ground) are not limited to the vertical distance from the vehicle to the ground. Indeed, the distance from the vehicle to the ground can be at any angle. This may depend on where the distance measurement sensor is mounted to the vehicle and/or the angle that the vehicle is travelling at. For example, where the vehicle is an aircraft, the angle from which the distance from the aircraft to the ground is measured may depend on where the sensor is mounted to the aircraft, and the roll and/or pitch angles of the aircraft. These factors can also be accounted for when determining theoretical distances.

In addition, whilst the examples discussed above are discussed largely in relation to aircraft, UAVs, UASs, and/or drones, or swarms thereof, the skilled person will understand that the systems and methods disclosed herein may be applied to other vehicles and/or swarms for improving navigation by providing improved position estimates which do not rely on GNSS-based navigation systems. By way of example, the present disclosure may also apply to land surface vehicles, and/or marine vehicles, and swarms thereof. In the case of marine vehicles, including for example marine surface vehicles and marine subsurface vehicles, distance may be configured to be measured from the vehicle to the sea floor. This may be particularly advantageous for unmanned and/or autonomous vehicles.

In the case of land vehicles, the skilled person will understand that, in some examples, the method may be performed without the requirement for a distance measurement sensor. For example, the land vehicle may instead rely on an altitude sensor, such as a barometer, or other sensor configured to measure the height of the vehicle in relation to sea level. By way of illustration, the method for use with a land vehicle may comprise obtaining two or more candidate locations for a vehicle and, for each of the two or more candidate locations, determining a theoretical distance from the vehicle to sea level (e.g. such as a theoretical altitude), based on terrain data. The method also comprises obtaining one or more single point measurements of an actual distance from the vehicle to the sea level (e.g. actual altitude). As described above, a terrain localisation for the vehicle may then be determined based on comparing the one or more single point measurements and the theoretical distance from the vehicle to sea level for each candidate location; and outputting a location estimate of the vehicle based on the determined terrain localisation.

It will be appreciated from the discussion above that the embodiments shown in the Figures are merely exemplary, and include features which may be generalised, removed, or replaced as described herein and as set out in the claims.

In the context of the present disclosure other examples and variations of the apparatus and methods described herein will be apparent to a person of skill in the art.

## Claims

1. A computer-implemented method for localisation of a vehicle, comprising:
obtaining two or more candidate locations for a vehicle;
for each of the two or more candidate locations, determining a theoretical distance from the vehicle to the ground, based on terrain data;
obtaining one or more single point measurements of an actual distance from the vehicle to the ground;
determining a terrain localisation for the vehicle based on comparing the one or more single point measurements and the theoretical distance from the vehicle to the ground for each candidate location; and
outputting a location estimate of the vehicle based on the determined terrain localisation.

2. The method of any preceding claim wherein determining the terrain localisation comprises selecting one of the two or more candidate locations based on which theoretical distance most closely matches the one or more actual distance measurements from the vehicle to the ground.

3. The method of any preceding claim wherein the one or more single point measurements of the distance from the vehicle to the ground are one or more single beam LiDAR measurements from the vehicle, optionally, wherein determining the theoretical distance from the vehicle to the ground for the two or more candidate vehicle locations comprises simulating theoretical LiDAR measurements taken from the two or more candidate vehicle locations; optionally wherein determining the terrain localisation is based on selecting the candidate vehicle location(s) which are most similar with the one or more single beam LiDAR measurements.

4. The method of any preceding claim wherein the terrain data is a terrain map.

5. The method of any preceding claim, further comprising:
obtaining a plurality of single point measurements of distance from the vehicle to the ground, each single point measurement corresponding to a point in time;
wherein determining the terrain localisation comprises determining a two-dimensional terrain localisation based on the plurality of single point measurements.

6. The method of any preceding claim, further comprising:
for each of the two or more candidate locations, obtaining a theoretical terrain localisation at said candidate location based on the terrain data; and
assigning a weighting to each of the two or more candidate locations of the vehicle based on a comparison between the theoretical terrain localisation at said candidate location and the determined terrain localisation based on the one or more single point measurements from the vehicle; and
wherein determining the terrain localisation of the vehicle is based on the weightings applied to each of the two or more candidate locations.

7. The method of any preceding claim, wherein obtaining the two or more candidate locations for the vehicle comprises obtaining a particle filter estimate, wherein each particle represents a candidate location of the vehicle;
and wherein outputting the location estimate of the vehicle comprises updating the particle filter estimate based on the comparison with the obtained one or more single point measurements and the terrain data.

8. The method of any preceding claim, wherein the two or more candidate locations are obtained based on a first location estimate, optionally wherein the two or more candidate locations for the vehicle are obtained based on an uncertainty margin associated with the first location estimate.

9. The method of claim 8 wherein the first location estimate for the vehicle is obtained based on a GNSS-independent navigation system of the vehicle, such as an inertial navigation system of the vehicle, optionally wherein the two or more candidate locations for the vehicle are obtained based on an uncertainty margin associated with the first location estimate output by the GNSS-independent navigation system.

10. The method of any preceding claim, wherein the vehicle is an aircraft, optionally wherein determining the terrain localisation is based on the one or more single point measurements and an indication of altitude of the aircraft at the time the one or more single point measurements were obtained.

11. The method of any preceding claim, further comprising estimating uncertainty in the determined terrain localisation based on similarity between the theoretical distances and the one or more single point measurements, optionally wherein outputting the location estimate of the vehicle further comprises implementing a Kalman filter to merge the determined terrain localisation with location estimates from other sources according to the estimated measure of uncertainty for said determined terrain localisation.

12. The method of any preceding claim, wherein outputting the location estimate of the vehicle comprises sending the location estimate of the vehicle to a navigation unit, optionally further comprising sending uncertainty data associated with the location estimate to the navigation unit.

13. An unmanned aerial vehicle comprising:
a single beam LiDAR sensor; and
a processor configured to perform the method of any preceding claim.

14. A method for navigation of an aircraft swarm, the method comprising:
obtaining a location estimate for a first aircraft according to the method of any of claims 1 to 12;
broadcasting the location estimate for the first aircraft to at least one second aircraft; and
updating a location estimate for the second aircraft based on the location estimate for the first aircraft and an indication of the location of the second aircraft relative to the first aircraft.

15. A computer program product comprising instructions configured to program a programmable processor to perform the method of any of claims 1 to 12, or 14.

## Amended claims

### Amended claims in accordance with Rule 137(2) EPC.

1. A computer-implemented method for localisation of a vehicle, comprising:
obtaining two or more candidate locations for a vehicle;
for each of the two or more candidate locations, determining a theoretical distance from the vehicle to the ground, based on terrain data stored in a memory;
obtaining one or more single point measurements of an actual distance from the vehicle to the ground;
determining a terrain localisation for the vehicle based on comparing the one or more single point measurements and the theoretical distance from the vehicle to the ground for each candidate location; and
outputting a location estimate of the vehicle based on the determined terrain localisation.

2. The method of any preceding claim wherein determining the terrain localisation comprises selecting one of the two or more candidate locations based on which theoretical distance most closely matches the one or more actual distance measurements from the vehicle to the ground.

3. The method of any preceding claim wherein the one or more single point measurements of the distance from the vehicle to the ground are one or more single beam LiDAR measurements from the vehicle, optionally, wherein determining the theoretical distance from the vehicle to the ground for the two or more candidate vehicle locations comprises simulating theoretical LiDAR measurements taken from the two or more candidate vehicle locations; optionally wherein determining the terrain localisation is based on selecting the candidate vehicle location(s) which are most similar with the one or more single beam LiDAR measurements.

4. The method of any preceding claim wherein the terrain data is a terrain map.

5. The method of any preceding claim, further comprising:
obtaining a plurality of single point measurements of distance from the vehicle to the ground, each single point measurement corresponding to a point in time;
wherein determining the terrain localisation comprises determining a two-dimensional terrain localisation based on the plurality of single point measurements.

6. The method of any preceding claim, further comprising:
for each of the two or more candidate locations, obtaining a theoretical terrain localisation at said candidate location based on the terrain data; and
assigning a weighting to each of the two or more candidate locations of the vehicle based on a comparison between the theoretical terrain localisation at said candidate location and the determined terrain localisation based on the one or more single point measurements from the vehicle; and
wherein determining the terrain localisation of the vehicle is based on the weightings applied to each of the two or more candidate locations.

7. The method of any preceding claim, wherein obtaining the two or more candidate locations for the vehicle comprises obtaining a particle filter estimate, wherein each particle represents a candidate location of the vehicle;
and wherein outputting the location estimate of the vehicle comprises updating the particle filter estimate based on the comparison with the obtained one or more single point measurements and the terrain data.

8. The method of any preceding claim, wherein the two or more candidate locations are obtained based on a first location estimate, optionally wherein the two or more candidate locations for the vehicle are obtained based on an uncertainty margin associated with the first location estimate.

9. The method of claim 8 wherein the first location estimate for the vehicle is obtained based on a GNSS-independent navigation system of the vehicle, such as an inertial navigation system of the vehicle, optionally wherein the two or more candidate locations for the vehicle are obtained based on an uncertainty margin associated with the first location estimate output by the GNSS-independent navigation system.

10. The method of any preceding claim, wherein the vehicle is an aircraft, optionally wherein determining the terrain localisation is based on the one or more single point measurements and an indication of altitude of the aircraft at the time the one or more single point measurements were obtained.

11. The method of any preceding claim, further comprising estimating uncertainty in the determined terrain localisation based on similarity between the theoretical distances and the one or more single point measurements, optionally wherein outputting the location estimate of the vehicle further comprises implementing a Kalman filter to merge the determined terrain localisation with location estimates from other sources according to the estimated measure of uncertainty for said determined terrain localisation.

12. The method of any preceding claim, wherein outputting the location estimate of the vehicle comprises sending the location estimate of the vehicle to a navigation unit, optionally further comprising sending uncertainty data associated with the location estimate to the navigation unit.

13. An unmanned aerial vehicle comprising:
a single beam LiDAR sensor; and
a processor configured to perform the method of any preceding claim.

14. A method for navigation of an aircraft swarm, the method comprising:
obtaining a location estimate for a first aircraft according to the method of any of claims 1 to 12;
broadcasting the location estimate for the first aircraft to at least one second aircraft; and
updating a location estimate for the second aircraft based on the location estimate for the first aircraft and an indication of the location of the second aircraft relative to the first aircraft.

15. A computer program product comprising instructions configured to program a programmable processor to perform the method of any of claims 1 to 12, or 14.
